# EUROPEAN PATENT SPECIFICATION

(11) **EP 0 854 674 B1**
(45) Date of publication and mention of the grant of the patent: **23.04.2003**
(21) Application number: 96930908.7
(22) Date of filing: 25.09.1996
(51) Int. Cl.: A01N 53/00, A01N 25/30

(54) **INSECTICIDE ADJUVANTS**
INSEKTIZIDHILFSMITTEL
ADJUVANTS POUR INSECTICIDES

(30) Priority: 29.09.1995 AU PN569895
(43) Date of publication of application: 29.07.1998
(73) Proprietor: VICTORIAN CHEMICAL INTERNATIONAL PTY. LTD., Richmond, VIC 3121 (AU)
(72) Inventor: KILLICK, Robert, William, Mount Waverley, VIC 3149 (AU); KILLICK, Andrew, Robert, Richmond, VIC 3121 (AU); WRIGLEY, Peter, Ronald, Glen Waverley, VIC 3150 (AU); JONES, Peter, William, Menzies Creek, VIC 3159 (AU)
(74) Representative: Guerre, Dominique
(86) International application number: AU9600603
(87) International publication number: WO97012515

(56) References cited:
- EP-A- 0 311 180
- EP-A- 0 394 847
- WO-A-94/24858
- AU-A- 6 640 094
- GB-A- 2 114 442
- US-A- 4 698 222
- DATABASE WPI Week 199503 Derwent Publications Ltd., London, GB; AN 019139 XP002156856 & JP 06 305904 A (TAKEDA ENGEI KK), 1 November 1994 (1994-11-01)
- DERWENT ABSTRACT, Accession No. 95-019139/03, Class C03; & JP,A,06 305 904, (TAKEDA ENGEI KK) 1 November 1994.

## Description

### Field of the Invention

This invention relates to compositions that are used as adjuvants to facilitate the effectiveness of insecticides. In particular, these adjuvants have application to pyrethroid insecticides.

### Background to the Invention

To maximise crop yields it has become essential to eliminate or substantially reduce the damage that pests inflict on crops. To this end, the chemical industry has developed a range of pesticides to combat most insects.

However, the man on the land daily faces the competing tension between the persistent pests which would reduce his crop yields and the environmental impact which can occur through use of pesticides. Accordingly, there has long been a continuing investigation into the best means to maximise pesticidal efficacy whilst minimising environmental damage.

Current general concerns to reduce pesticide input in farming have raised questions about how this can be achieved quickly, cost effectively and in a manner which is environmentally acceptable. It is now recognised that by integrating formulation and application procedures, increased efficacy of agrochemical treatments is possible thereby reducing the mass of application of active ingredient (a.i.) necessary to control weeds, pests and diseases as disclosed in "The Behaviour of Pyrethroid Insecticide Deposits and their Transfer from Plant to Insect Surfaces," Ford, M.G. and Salt, D.W., *in* "Pesticides on Plant Surfaces," Critical Reviews in Applied Chemistry, (1987), **18**, 26-28, Ed. Cottrell, H.J..

Furthermore, integration of these procedures may lead to selective treatments based on broad spectrum products as disclosed in "Pyrethroid Insecticide Exposure, Pick-up and Pharmacokinetics with Target and Non-target Insects," Ford, M.G. *in* "Interpretation of Pesticide Affects on Beneficial Anthropods," Aspects of Applied Biology, (1992), **24**, 29-41, Ed. Brown, R.A., Jepson. P.C., Sotherton, N.W. Association of Applied Biologists, Wellesbourne.

The use of spray adjuvants is an illustration of how this approach is being applied by farmers who wish to reduce costs and protect the environment by reducing pesticide inputs on their farms. Most research to date concerns spray additives to enhance the performance of herbicides in crop protection. These materials include surfactants and petroleum oils which can be harmful to the environment.

A particular insecticide is *Fastac*™ (American Cyanamid Company) which has alpha-cypermethrin as its active insecticide ingredient. This product is available in an emulsifiable concentrate (EC) or as an ultra low volume (ULV) formulation for specialist low volume aerial application. The bulking agent is usually a paraffinic oil.

Materials derived from plant oils which are non-toxic, biodegradable and therefore less hazardous are being considered for use as adjuvants in farming operations as disclosed in WO 94/24858 by Victorian Chemical Co. Pty. Ltd. and Wilbur-Ellis Company. In that patent application, ethylated esterified seed oils are used to improve the efficacy of herbicide, crop desiccant and defoliant treatments by softening the leaf waxes and enhancing penetration.

EP 0 311 180 describes the use of some spreading agents together with pyrethroids.

### Summary of the Invention

It has now been surprisingly found that certain adjuvants enhance the activity of pyrethroid insecticides. In particular the synthetic pyrethroids have been enhanced. Typical of these pyrethroids are alpha-cypermethrin and lambda-eyhalothin, the latter being the active insecticide ingredient in the emulsifiable concentrate. *Karate*® (ICI Australia Limited).

According to the invention, an adjuvant is provided for use with a pyrethroid insecticide including one or more alkyl esters of fatty acids having a level of unsaturation of at least 40%. Higher levels of unsaturation are preferred (eg. at least 50%) being more effective as penetrants. Preferably, the alkyl esters are ethyl or methyl esters. The ethyl esters are most preferred.

There are innumerable variations of the preferred ethyl ester since the ethyl esters of fatty acids may be produced from the natural oils and fats such as lard, tallow and vegetable oils or from specific blends produced by fatty acid manufacturers or from fatty acids produced by synthetic means. Readily available commercial vegetable oils such as canola, corn, sunflower and soyabean oils are also sources for fatty acids. Such fatty acids will generally be described in this patent specification as unsaturated fatty acids or oleates.

In another embodiment of the invention, an adjuvant is provided for use with a pyrethroid insecticide including one or more alkyl esters of dibasic acids. A preferred ester is a maleate ester (eg. di-isooctylmaleate).

The adjuvant of the invention may be incorporated with the active insecticide and be applied or diluted prior to application. Alternatively, the adjuvant may be added to a mixture of insecticide and diluent that is otherwise ready for application.

Preferably, the adjuvant is added to an insecticide in an amount of at least 0.5% v/v. Where the application of the insecticide is as a ULV formulation, the adjuvant may exceed 80%, as the adjuvant is also acting as the diluent of the insecticide. However, when the addition of the adjuvant is not for diluent purposes, it is preferably present in amounts of from 0.5 to 25 % v/v, more preferably 1 to 10% v/v and most preferably about 2 to 5% v/v.

In this specification when reference is made to the concentration of adjuvant, it means the adjuvant concentration on a v/v basis of the final mixture ready to be applied eg. sprayed.

In another preferred embodiment of the invention, the composition includes a non-ionic emulsifier. These are well known to those skilled in the art and it is recognised that there are a multitude of combinations. Preferably, a non-ionic ester of the fatty acid moiety provides unexpected emulsification and coupling effects to furnish a finished homogeneous product. The non-ionic emulsifier works to provide the preferred emulsification characteristics for the alkyl esters.

In another preferred embodiment, the non-ionic emulsifiers are a combination of alkylaryl ethoxylate and a polyethyleneglycol (PEG) ester of fatty acids. Preferably, the alkylaryl ethoxylate is obtained by reacting any one of the group of alcohols selected from octyl-, nonyl- or dodecylphenol with 3 to 13 moles of ethylene oxide, whilst the PEG ester is of molecular weight range 200-600 with either one or two moles of unsaturated fatty acids.

Whilst it is acknowledged that the emulsifiers outlined above cover a wide range of physical properties and provide wide ranging emulsification abilities, it is important to note that a balance between two quite different emulsifiers can produce a far greater effect than an intermediate emulsifier. With this in mind, many combinations of alkylaryl ethoxylates and PEG esters can provide adequate emulsification of alkyl esters of unsaturated fatty acids for adjuvant systems. A preferred combination is ethoxylated nonylphenol with 9 moles of ethylene oxide and PEG 400 di-oleate in the ratio 1:2 by weight.

In another preferred embodiment, the non-ionic emulsifier is the ethoxylated soy-amine base. A preferred emulsifier would have 15 moles of ethoxylation.

In other preferred embodiments, other non-ionic emulsifiers of interest are those selected from the group of fatty alcohols. A preferred emulsifier would comprise a fatty acid having 6 moles of ethoxylation on the 12 carbon alcohol.

In another preferred embodiment of the invention, a method of treating insects is provided which includes the application to a crop of a pyrethroid insecticide and an adjuvant including one or more alkyl esters of fatty acids having a level of unsaturation of at least 40% or one or more alkyl esters of dibasic acids.

The invention will now be further illustrated with reference to the following non-limiting examples.

### Examples - Series 1

### Materials and Methods

An investigation was carried out to show how the processes of dose transfer, penetration and distribution of alpha-cypetmethrin are affected by the use of the adjuvants *Esterol 123, Vicchem* EOP and *Vicchem* DOP (Victorian Chemical Company, Richmond, Victoria; Australia) and how any changes might modify the effectiveness of alpha-cypermethrin as a contact pyrethroid insecticide.

*Esterol 123* is the proprietary product made by Victorian Chemical Company and is substantially ethyl oleate material.

*Vicchem* EOP is the proprietary product made by Victorian Chemical Company and is a combination of *Esterol 123* and non-ionic emulsifiers such that the proportions of constituents (% w/w) are:

| | |
|---|---|
| *Esterol 123*/ethyl oleate | 76 |
| PEG 400 di-oleate | 16 |
| Nonylphenol ethoxylate (9EO) | 8 |

*Vicchem* DOP is the proprietary product made by Victorian Chemical Company and is a combination of di-isooctylmaleate and nun-ionic emulsifiers such that the proportions of constituents (% w/w) are:

| | |
|---|---|
| Di-isooctylmaleate | 76 |
| PEG 400 di-oleate | 16 |
| Nonylphenol ethoxylate (9EO) | 8 |

Alpha-cypermethrin is a commercially available emulsifiable concentrate *Fastac*™ EC, 100g a.i./l.

### Penetration studies using isolated insect cuticles

Penetration of topically applied alpha-cypermethrin (4 µl of an aqueous solution of *Fastac*™ EC containing 1% a.i. w/v) across isolated cuticles of final instar larvae of *Spodoptera littoralis* Boisd. was studied using a diffusion flow cell. Changes in the solute concentrations in the receptor solvent were monitored at 220 nm wavelength at 10 second intervals. The penetration rates for *Fastac*™ EC (1% w/v of a.i. as above) with and without *Esterol 123*, *Vicchem* EOP or *Vicchem* DOP (1% v/v) were compared to establish whether these adjuvants modify cuticle permeability.

### Droplet ageing on glass slides

*Esterol 123, Vicchem* EOP and *Vicchem* DOP were added to the *Fastac*™ EC already diluted to 1% a.i, w/v with distilled water to give final solutions containing 1, 5, 10 or 25% v/v of adjuvant. Droplets (20 µl) of each solution were applied to glass microscope slides and left to dry. For comparison, droplets of pure *Vicchem* EOP and *Vicchem* DOP were also prepared. The effect of deposit ageing was assessed throughout a 24 hour period.

### Pick-up, penetration and redeposition of alpha-cypermethrin

Pick-up of alpha-cypermethrin from droplets placed on glass slides was investigated to determine whether addition of adjuvant enhanced dose transfer. Adult mustard beetles held dorsally by a suction pooter were placed in contact with the centre of a deposit for 2 seconds, removed to a petri dish and left for 2 hours before being immersed in Analar acetone to remove transferred pyrethroid insecticide. The beetles were removed and the washings analysed for alpha-cypermethrin using electron capture detection (ECD) on a Hewlett Packard 1580 gas chromatograph (GC). The washed beetles were then frozen in liquid nitrogen to remove tissue water, crushed and further extracted in acetone to determine the internal concentrations of penetrated alpha-cypermethrin using ECD GC.

Beetles were held as before in order to contact deposits containing the diluted EC (1% w/v alpha-cypermethrin) and known amounts of adjuvant (*Vicchem* EOP or *Vicchem* DOP). Redeposition of alpha-cypermethrin onto glass surfaces was followed for five successive contacts (2 sec per contact) in order to estimate the retained fraction. The contaminated beetles and glass surfaces were washed immediately with acetone and analysed for alpha-cypermethrin using a Hewlett Packard GCD (ion-selective mode).

### Response of mustard beetles following contact with aged deposits

Beetles were held for 2 seconds in contact with deposits prepared earlier from solutions containing known amounts of alpha-cypermethrin and adjuvant. The treated insects were then confined to filter paper lined petri dishes. Knockdown and mortality were observed at frequent intervals after treatment.

### Results

### Penetration studies using isolated insect cuticles

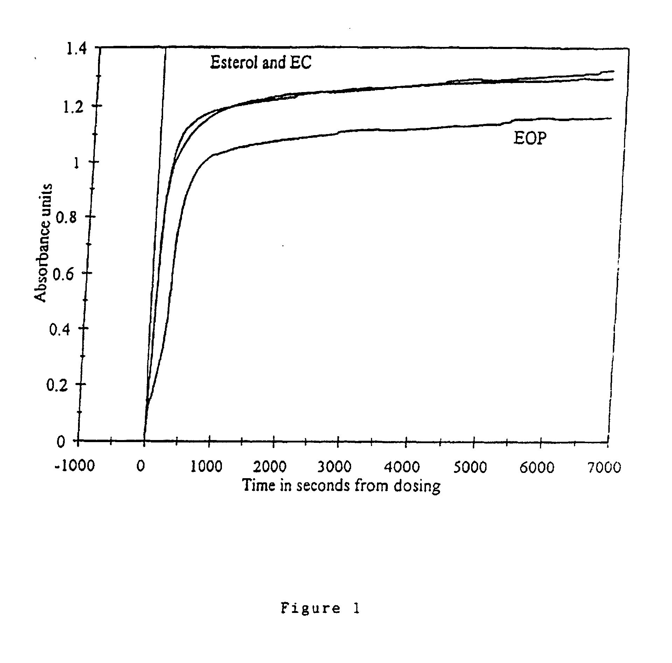

Penetration profiles for EC formulations containing 1% w/v alpha-cypermethrin with and without *Esterol 123, Vicchem* EOP and *Vicchem* DOP (1% v/v) are presented in Series 1, Figure 1. All four formulations penetrated the cuticle at matching rates to produce similar absorbency profiles with time. These profiles measure the penetration of all of the formulation components including the active ingredient.

The results suggest that these adjuvants make little difference to the overall permeability of the cuticle as a result of surface effects, for example by modifying the organisation of the epicuticular waxes as suggested for plant cuticles.

### Droplet ageing on glass slides

On drying, the EC formulation formed a liquid deposit from which the pyrethroid insecticide crystallised slowly with time. Addition of *Esterol 123*, *Vicchem* EOP and *Vicchem* DOP slowed the ageing process and prevented crystallisation so that deposits remained liquid 24 hours after application to glass. In this fluid state, pyrethroid insecticide deposits are known to be more available for transfer to contacting insects.

### Pick-up, redeposition and subsequent penetration of alpha-cypermethrin

Addition of the adjuvants *Esterol 123* and *Vicchem* EOP increased the amount of alpha-cypermethrin initially transferred following a single 2 second contact with deposits aged for four hours after application of 20 µl droplets to glass slides (Table 1). *Esterol 123* was the most effective treatment when the adjuvants were added at a concentration of 1% v/v; increasing the adjuvant concentration to 5% v/v increased the transfer of alpha-cypermethrin from the *Vicchem* EOP and *Vicchem* DOP formulations to the level attained by *Esterol 123* at 1% v/v.

**Table 1.**

| **Recoveries (µg/insect) of alpha-cypermethrin from the transfer to adult mustard beetles following a single 2 second contact between the deposit and the tarsi.** | | | |
|---|---|---|---|
| Adjuvant concentration (% v/v) | 0 | 1 | 5 |
| *Esterol 123* | 0.26 | 14.4 | 15.8 |
| *Vicchem* EOP | 0.26 | 6.1 | 14.5 |

Redeposition of alpha-cypermethrin following initial contact with deposits prepared from a solution of alpha-cypermethrin and *Vicchem* EOP (1% w/v) was investigated in a similar manner. Adult beetles were held in contact with deposits for 2 seconds, as before, and then brought into contact with 5 successive clean glass surfaces for the same time to allow any redeposition from the tarsi onto the glass to take place. The contaminated surfaces were washed with acetone and the washings analysed by GCD. Although initial contact with such deposits resulted in an average transfer of 3 µg/insect, no subsequent redeposition was detected. Thus, the initial amount transferred remained on the insect where it was available for poisoning.

**Table 2.**

| **Recoveries (µg/insect) of alpha-cypermethrin from the surface and internal tissues of adults of *Phaedon cochleariae* Fab. following contact (2 sec) with deposits containing ethylated esterified seed oils.** | | | | | |
|---|---|---|---|---|---|
| Adjuvant concentration (% v/v) | 0 | 1 | 5 | 10 | 25 |
| External | | | | | |
| *Esterol 123* | 0.94 | 1.92 | 3.30 | 2.84 | 2.06 |
| *Vicchem* EOP | 0.94 | 1.96 | 3.52 | 2.08 | 3.62 |

| Internal | | | | | |
|---|---|---|---|---|---|
| *Esterol 123* | 0.33 | 1.02 | 2.58 | 1.20 | 1.32 |
| *Vicchem* EOP | 0.33 | 0.33 | 5.90 | 3.72 | 1.59 |

Penetration of acquired alpha-cypermethrin was investigated following 2 second contacts of beetles with deposits formed from formulations containing different amounts of adjuvant. Analysis of the quantities recovered from the beetle surface and the internal extracts (Table 2) suggests an optimum adjuvant concentration (5% v/v) which gave maximal dose transfer and internal accumulation of alpha-cypermethrin 4 hours after contact. Thus, the adjuvant is seen to have some effect on cuticular penetration and the concentration sprayed is also significant.

### Response of mustard beetles following contact with deposits of alpha-cypermethrin

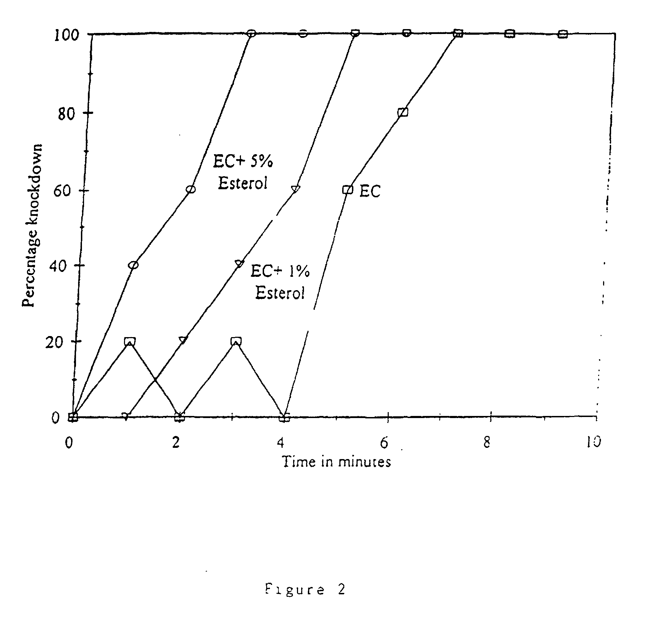

The influence of ethylated esterified seed oils on the insect response was investigated and is depicted in Series 1, Figures 2, 3 and 4.

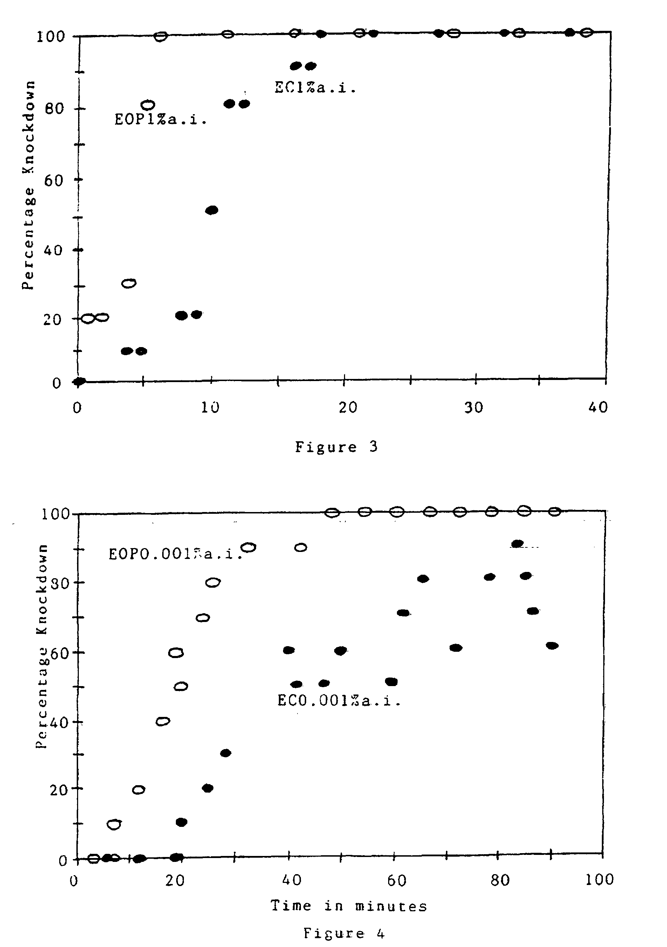

At the recommended field rate of 1 % w/v alpha-cypermethrin, a *Fastac*™ EC formulation containing adjuvants such as *Esterol 123* produce quicker knockdown in adult mustard beetles, *Phaedon cochleariae* Fab., than the same formulation applied alone. Similar results were obtained when the adjuvant *Vicchem* EOP was used as a carrier solvent. Thus, *Vicchem* EOP has potential as an pyrethroid insecticide carrier (Figures 3 and 4). This use of *Vicchem* EOP, for example, gave 100% knockdown at a concentration of alpha-cypermethrin of 0.001% a.i. w/v. The same concentration of a.i. resulted in only 60-80% knockdown (the upper response limit) following contact with deposits containing *Fastac*™ EC, suggesting that use of the adjuvant as a carrier increases insecticidal efficacy (Figure 4). Thus, effective treatments are possible using less pyrethroid insecticide.

This study suggests that the use of adjuvants derived from ethylated esterified seed oils increases the efficacy of the contact pyrethroid insecticide alpha-cypermethrin in a dose-related manner. The effect results primarily from an increased transfer of pyrethroid insecticide to adult mustard beetles, *Phaedon cochleariae* Fab. following contact with residual deposits. The higher internal levels of toxin which are observed 4 hours after encountering a deposit and associated changes in the speed of intoxication probably reflect this enhanced pick-up, although changes in the rate of cuticular penetration cannot be entirely discounted. Use of *Vicchem* EOP as a carrier solvent for alpha-cypermethrin resulted in a more effective treatment than *Fastac*™ EC applied at an equivalent concentration (0.001% a.i. w/v). It should therefore be possible to reduce the quantity of pyrethroid insecticide sprayed either by adding an appropriate adjuvant to the tank mix or by reformulating alpha-cypermethrin in a novel carrier such as *Vicchem* EOP.

### Examples Series 2

### Materials and Methods

These studies were undertaken to investigate the efficacy of *Esterol 112* (also obtained from Victoria Chemical Company) and *Esterol 123* as bulking oils.

*Esterol 112* is the proprietary product made by Victorian Chemical Company and is substantially methyl oleate material.

*Vicchem* MOP is the proprietary product made by Victorian Chemical Company and is a combination of *Esterol 112* and non-ionic emulsifiers such that the proportions of constituents are:

| | |
|---|---|
| *Esterol 112*/methyl oleate | 76 |
| PEG 400 di-oleate | 16 |
| Nonylphenol ethoxylate (9EO) | 8 |

*Esterol 123*, *Vicchem* EOP and *Vicchem* DOP are as described in the Series 1 examples.

*Fastac*™ ultra low volume (ULV) containing 1% w/v alpha-cypermethrin, (obtained from Cyanamid, Gosport, UK) was used as the commercial pyrethroid insecticide. This ULV formulation was mixed with the following oil adjuvants (co-diluents):
*Shellsol D100* (a petroleum derived solvent which has been highly refined to convert aromatics to cycloparaffins (Shell International));
*Esterol 123* and *Esterol 112.*

Penetration studies using isolated insect cuticles, the pick-up, penetration and redeposition of alpha-cypermethrin and the response of mustard beetles following contact with aged deposits were as described in the Series 1 examples.

### Results

### Response of Fastac™ ULV blank and each adjuvant alone

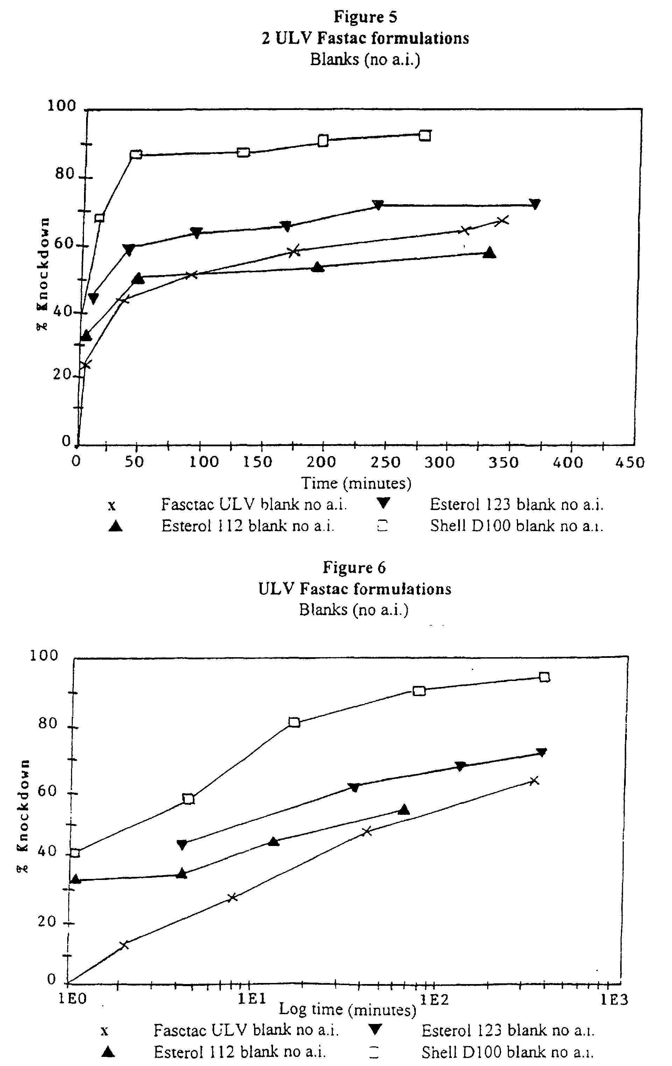

The results from Series 2, Figures 5 and 6, show that each oil induces knockdown in adult mustard beetles brought into contact with a 4 hour old deposit placed on a glass slide. Complete recovery was observed twelve hours after contact with the *Fastac*™ ULV blank. However, there was no significant recovery after contact with *Esterol 123, Esterol 112* or *Shellsol D100.* These results demonstrate that undiluted oils can themselves exert some insecticidal activity.

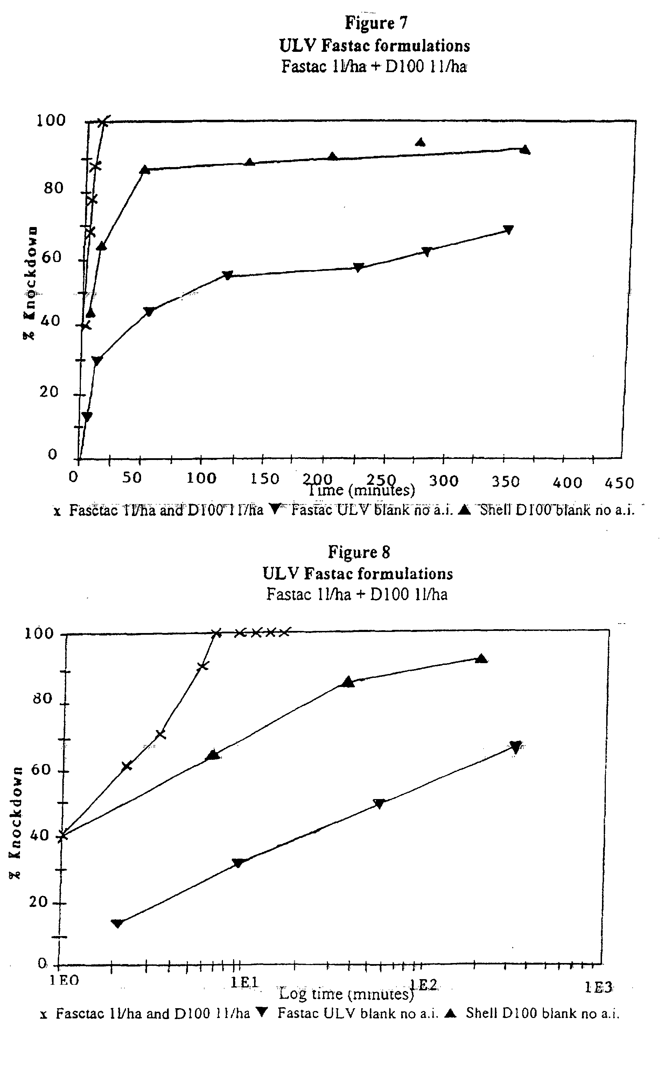

In Series 2, Figures 7 and 8 show that a mixture containing 50% by volume 1% a.i. w/v *Fastac*™ ULV and 50% by volume *Shellsol D100* gave 100% knockdown and was faster acting than either the *Fastac*™ ULV blank or the *Shellsol D100* bulking oil. Neither of the alpha-cypermethrin blanks gave complete knockdown.

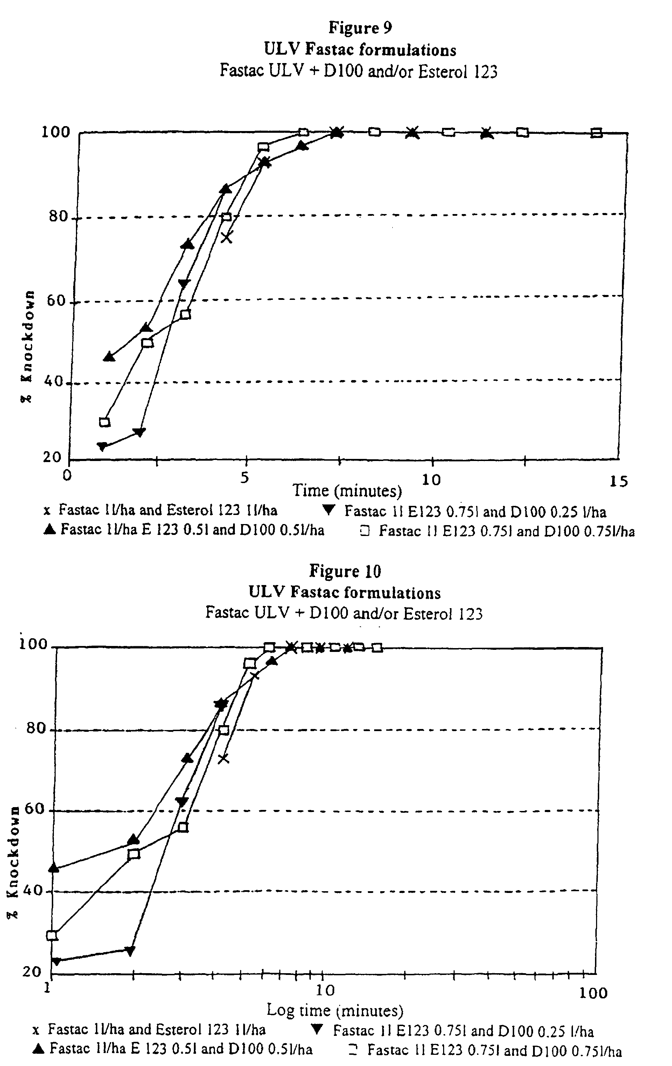

When *Esterol 123* was mixed in different proportions with commercial bulking oil, *Shellsol D100,* for use as for the ULV formulation *Fastac*™ (1% a.i.), changing the ratio of adjuvants but maintaining the *Fastac*™ at 50% v/v had no effect on the speed of knockdown as illustrated in Series 2, Figures 9 and 10. This result shows that *Esterol 123* and *Shellsol D100* are equally effective as bulking oils for this formulation of alpha-cypermethrin.

However, all four mixtures of adjuvants gave 100% mortality after 12 hours, whereas that containing only *Shellsol D100* gave approximately 17% recovery of the mustard beetles. This result indicates that greater dose transfer of alpha-cypermethrin is obtained in the presence of the adjuvants.

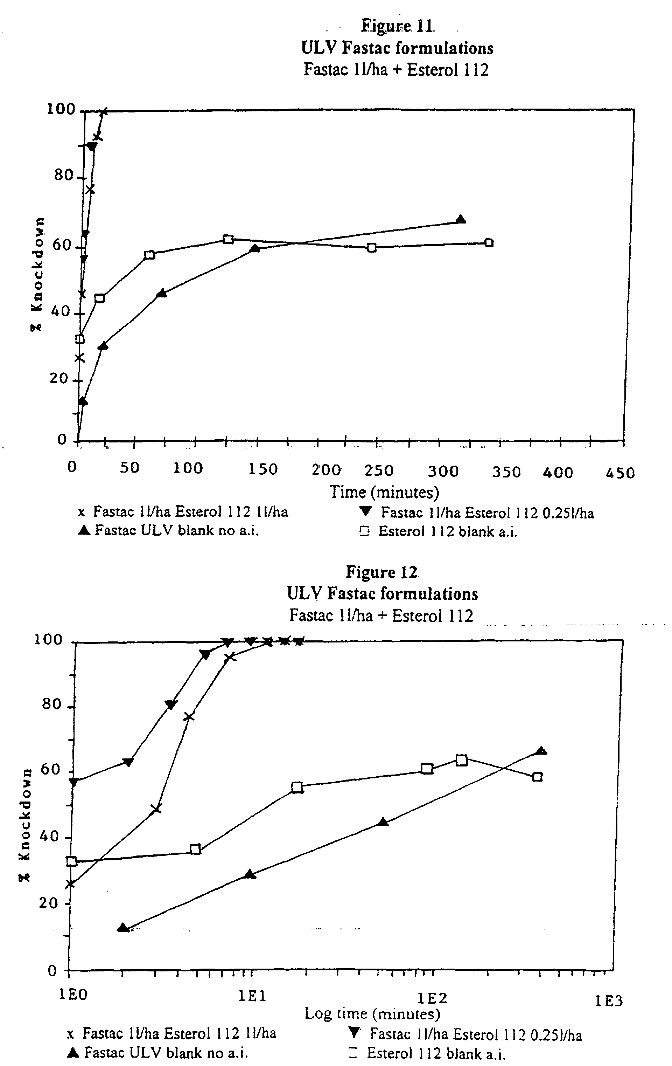

In another experiment, *Fastac*™ ULV 1% w/v was diluted by 50% and 20% v/v, respectively with *Esterol 112* to give mixtures containing different concentrations of *Fastac*™ formulation components including alpha-cypermethrin. The results from Series 2, Figures 11 and 12, confirm that mixtures containing a.i. are much faster acting than the blanks. Furthermore, the formulation containing the smallest amounts of *Esterol 112,* and therefore the greatest concentration of alpha-cypermethrin appears to be the fastest acting mixture. Only the mixtures containing a.i. gave 100% mortality.

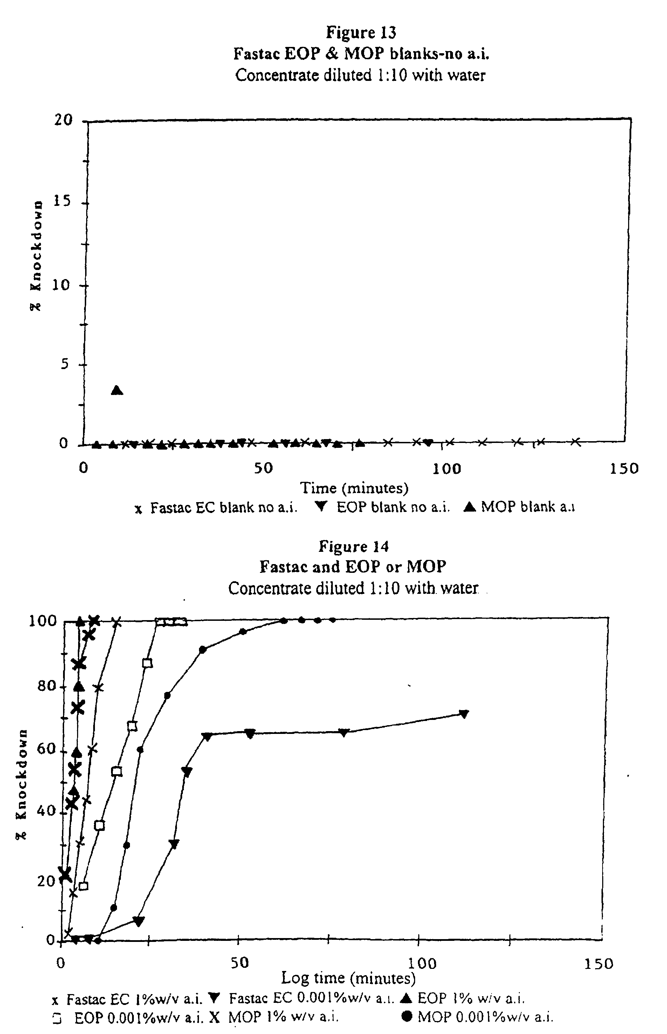

The responses due to alpha-cypermethrin dissolved in *Vicchem* EOP, *Vicchem* MOP or *Fastac*™ EC blank prior to final dilution with water to give concentrations of a.i. of 0.001% and 1% w/v were also compared directly. The results show that at both concentrations of alpha-cypermethrin, the addition of adjuvants produced faster knockdown. The results at 0.001% w/v a.i. demonstrate the benefits of addition of adjuvants most clearly in Series 2, Figures 13, 14 and 15.

The formulation containing alpha-cypermethrin dissolved in *Vicchem* EOP gave the most rapid knockdown, followed by that dissolved in *Vicchem* MOP; the *Fastac*™ blank gave the slowest knockdown. This ranking was also observed at the higher concentration of a.i. (1% w/v). Percentage mortality follows the same trend. At 0.001% a.i., *Fastac*™ EC alone gave only 47% kill 24 hours after contact. Addition of *Vicchem* EOP and *Vicchem* MOP always resulted in 100% kill with 0.001% a.i. alpha-cypermethrin.

### Examples - Series 3

The materials and methods, the pick-up, penetration and redeposition of lambda-cyhalothrin and the response of mustard beetles following contact with aged deposits were as described in the Series 1 examples.

### Results

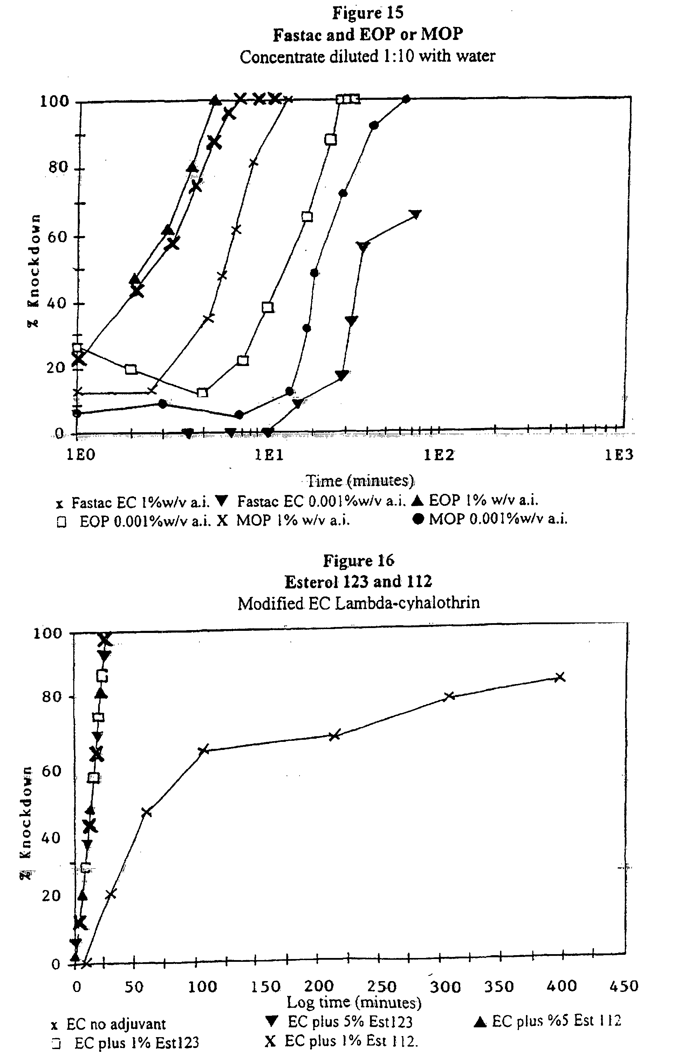

Each of the insecticides and adjuvant mixtures was very effective compared with the pyrethroid lambda-cyhalothrin alone as shown in Series 3, Figure 16. The insecticide with *Esterol 112* and *Esterol 123* at 5% v/v were the most effective initially exhibiting a higher knock down rate than insecticide compositions having 1% of these adjuvants. However, all the adjuvant and insecticide mixtures showed superior knock down rates to the insecticide not mixed with the adjuvants. This shows that these adjuvants improve the insecticidal performance of lambda-cyhalothrin.

### Examples - Series 4

### Materials and Methods

A series of laboratory bioassays was carried out to determine if *Vicchem* EOP could improve the efficacy of the synthetic pyrethroids *Bulldock* EC (Bayer; betacyfluthrin at 25g a.i./litre) and *Decis Forte* EC (AgrEvo; deltamethrin at 27.5g a.i./litre). Black field crickets were treated with 2.0% composition of *Vicchem* EOP.

The black field cricket (*Teleogryllus commodus*) is a chewing insect and the first instars (i.e. newly emerged crickets) from a laboratory culture were used to test these pyrethroids. The culture was maintained at 24°C in a controlled-temperature room. The adults were reared from nymphs in ventilated plastic containers. The crickets were fed grain pellets throughout their life stages. Equal numbers of males and females were present and first instars were removed daily for bioassays.

Insecticides in all treatments were applied using a Potter tower (Burkard) to ensure consistent application rates. The tower was run at 40 kPa and delivered droplets at about 50 µm in diameter. Plain cabbage was used for the bioassays.

Cabbage leaves were sectioned and placed onto the base of a petri dish (9 cm diam). One side only was sprayed and the leaf section was air-dried for 20 min. in a fume-hood. Controls were sprayed with water only. Five sections (replicates) were prepared for each dose. A sharpened steel cutter (18 mm in diam) was used to cut 3 discs from each sprayed section and these were placed into the base of the glass petri disc (9 cm in diam.). First instars were placed into each disc using a camel hair brush, before replacing the lid. Each replicate contained 10 crickets. The bioassays were conducted at 25°C and cricket mortality was assessed after 24 hours.

An initial comparison was made between sprayed leaf discs and the contact toxicity of the adjuvant and *Bulldock* EC, sprayed onto the glass only. The adjuvant and *Bulldock* EC were applied separately at varying rates in order to determine a dose response curve. Petri dish bases (9 cm diam.) were sprayed and then air-dried for 20 min. Controls were sprayed with water only. Five replicates were prepared and each plate was innoculated with 10 crickets. The bioassays were conducted at 25°C and cricket mortality was assessed after 24 hours.

### Results

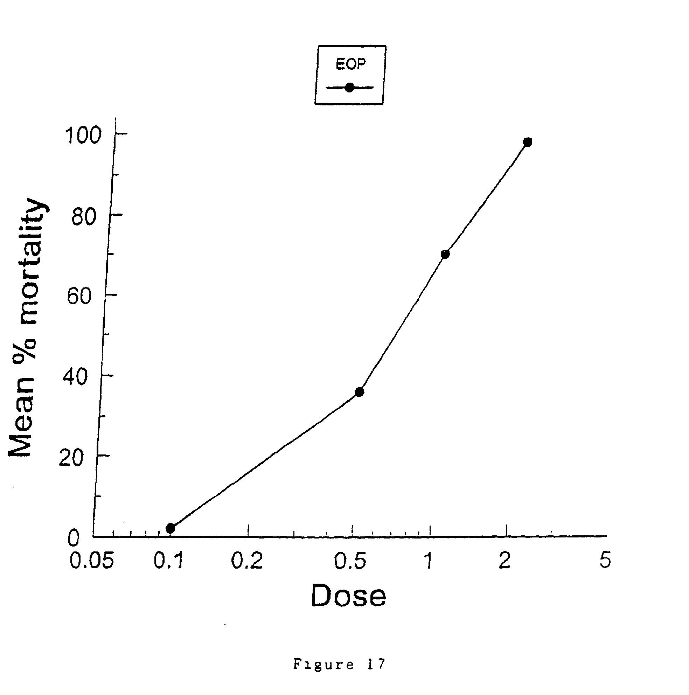

*Vicchem* EOP shows insecticidal activity when crickets were placed onto bare treated glass as shown in Series 4, Figure 17 and mortality increased with the increasing concentrations of *Vicchem* EOP.

No cricket mortality was recorded when the leaf discs were sprayed with either 0.5% or 2.0% *Vicchem* EOP. It would appear that this result is due to lower effective doses being available on the leaf discs than on bare glass, or because of penetration of the *Vicchem* EOP into the leaf tissue, or a combination of both factors.

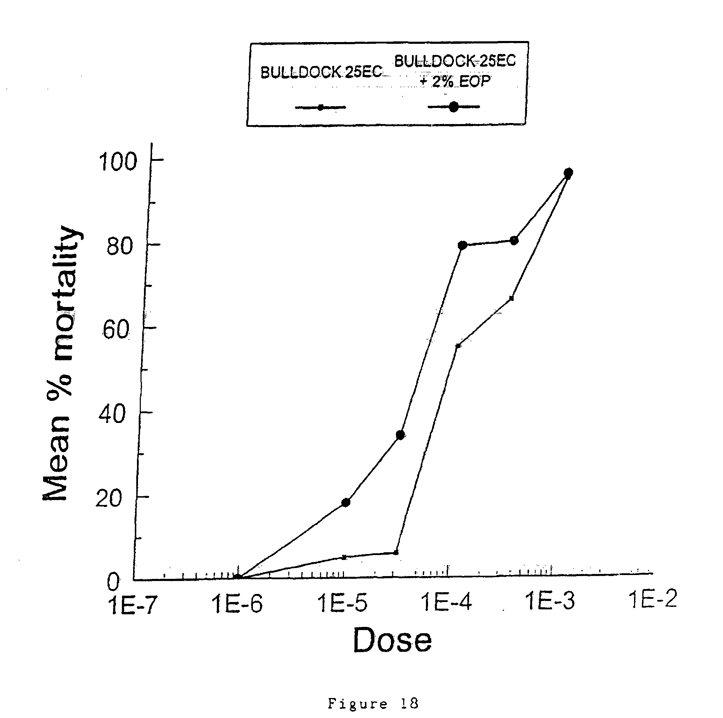

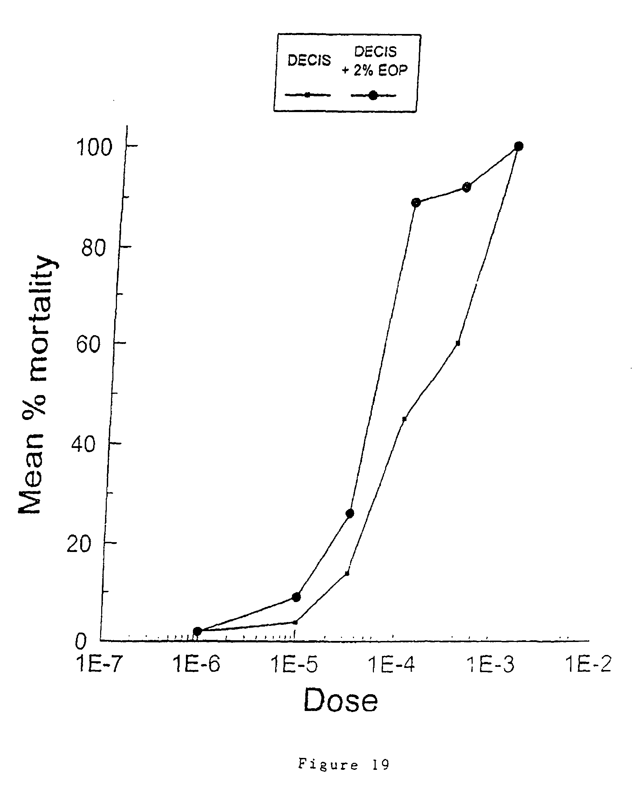

*Vicchem* EOP at a concentration of 2.0% shifted the dose-response curve for the synthetic pyrethroids, *Bulldock* EC as illustrated in Series 4, Figure 18 and for *Decis Forte* EC shown in Series 4, Figure 19 revealing a significant increase in the relative efficacy of these pyrethroids.

### Summary of Results

From the above results as shown in Series 1, 2, 3 and 4 examples, it is apparent that this invention allows the use of enhancing adjuvants for pyrethriod insecticides to either improve their effectiveness or minimise the amount of active ingredient which needs. to be applied to crops to kill insects.

## Claims

1. Use of:
(i) at least one alkyl ester of a fatty acid having a level of insaturation of at least 40%, or at least one alkyl ester of a dibasic acid, and
(ii) at least one non-ionic emulsifier, as an adjuvant for improving the effectiveness or minimising the amount of a pyrethroid active ingredient.

2. Use according to claim 1, in an insecticide composition comprising a pyrethroid active ingredient.

3. Use according to claim 1 or 2, wherein said adjuvant comprises said at least one alkyl ester of a fatty acid (i), representing at least 50% of said adjuvant, and said at least one non-ionic emulsifier.

4. Use according to claim 1 or 2, wherein said at least one alkyl ester of a fatty acid (i) has a level of insaturation of at least 50%.

5. Use according to claim 3 or 4, wherein said at least one alkyl ester of a fatty acid (i) is methyl or ethyl ester.

6. Use according to claim 5, wherein said at least one alkyl ester of a fatty acid (i) is ethyl ester.

7. Use according to claim 1 or 2, wherein said at least one alkyl ester of a dibasic ester is maleate ester.

8. Use according to claim 1 or 2, wherein said at least one alkyl ester of a dibasic ester is di-isooctylmaleate ester.

9. Use according to anyone of claims 1 to 8, wherein said at least one non-ionic emulsifier (ii) is a non-ionic ester of the fatty acid moiety.

10. Use according to anyone of claims 1 to 9, wherein said at least one non-ionic emulsifier (ii) is a polyethyleneglycol (PEG) ester of fatty acids.

11. Use according to anyone of claims 1 to 10, wherein said adjuvant comprises a combination of two or more non-ionic emulsifiers.

12. Use according to claim 11, wherein said at least one non-ionic emulsifier (ii) is a combination of alkylaryl ethoxylate and a polyethyleneglycol (PEG) ester of unsaturated fatty acids.

13. Use according to claim 12, wherein said alkylaryl ethoxylate is obtainable by reacting at least one member of the group consisting of octyl-, nonyl- or dodecylphenol with 3 to 13 moles of ethylene oxide, and wherein the PEG ester has a molecular weight range of 200-600 with either one or two moles of unsaturated fatty acids.

14. Use according to claim 12, wherein said alkylaryl ethoxylate is obtainable by reacting ethoxylated nonylphenol with 9 moles of ethylene oxide and PEG 400 di-oleate, in the ration 1:2 by weight of said alkylaryl ethoxylate to said PEG 400 di-oleate.

15. Use according to anyone of claims 1 to 8, wherein said at least one non-ionic emulsifier (ii) is an ethoxylated soy-amine base.

16. Use according to claim 15, wherein said ethoxylated soy-amine base has 15 moles of ethoxylation.

17. Use according to anyone of claims 1 to 8, wherein said at least one non-ionic emulsifier (ii) is a fatty alcohol.

18. Use according to claim 17, wherein the fatty alcohol has 6 moles of ethoxylation on a 12 carbon alcohol.

19. Use according to anyone of claims 1 to 18, wherein said insecticide composition comprises at least about 0.5% v/v of said adjuvant and a pyrethroid active ingredient.

20. Use according to anyone of claims 1 to 18, wherein said insecticide composition comprises at least about 80% v/v of said adjuvant and a pyrethroid active ingredient.

21. Use according to anyone of claims 1 to 18, wherein said insecticide composition comprises at least from about 0.5 to 25% v/v of said adjuvant and a pyrethroid active ingredient.

22. Use according to anyone of claims 1 to 18, wherein said insecticide composition comprises at least about 1 to 10% v/v of said adjuvant and a pyrethroid active ingredient.

23. Use according to anyone of claims 1 to 18, wherein said insecticide composition comprises at least about 2 to 5% v/v of said adjuvant and a pyrethroid active ingredient.

24. A method for treating insects comprising applying to a crop an insecticide composition comprising a pyrethroid active ingredient, and an adjuvant comprising:
(i) at least one alkyl ester of a fatty acid having a level of insaturation of at least 40%, or at least one alkyl ester of a dibasic ester, and (ii) at least one non-ionic emulsifier.

25. Method according to claim 24, wherein said adjuvant is incorporated with said insecticide composition and applied to said crop, or diluted prior to application.

26. A method according to claim 24, wherein said adjuvant is added to said insecticide composition and a diluent.

## Patentansprüche

1. Verwendung von
(i) zumindest einem Alkylester einer Fettsäure mit einem Grad an Unsättigung von zumindest 40 % oder zumindest einem Alkylester einer dibasischen Säure, und
(ii) zumindest einem nicht-ionischen Emulgator als ein Hilfsmittel zum Verbessern der Wirksamkeit oder zur Minimierung der Menge eines Pyrethroid-Wirkstoffes.

2. Verwendung nach Anspruch 1, bei einer Insektizidzusammensetzung, die einen Pyrethroid-Wirkstoff aufweist.

3. Verwendung nach Anspruch 1 oder 2, bei der das Hilfsmittel den zumindest einen Alkylester einer Fettsäure (i) aufweist, welcher zumindest 50 % des Hilfsmittels darstellt und ferner den zumindest einen nicht-ionischen Emulgator aufweist.

4. Verwendung nach Anspruch 1 oder 2, bei der der zumindest eine Alkylester einer Fettsäure (i) einen Grad an Unsättigung von zumindest 50 % aufweist.

5. Verwendung nach Anspruch 3 oder 4, bei der der zumindest eine Alkylester einer Fettsäure (i) ein Methyl- oder ein Ethylester ist.

6. Verwendung nach Anspruch 5, bei der der zumindest eine Alkylester einer Fettsäure (i) ein Ethylester ist.

7. Verwendung nach Anspruch 1 oder 2, bei der der zumindest eine Alkylester einer dibasischen Säure ein Maleatester ist.

8. Verwendung nach Anspruch 1 oder 2, bei der der zumindest eine Alkylester einer dibasischen Säure di-Isooctylmaleatester ist.

9. Verwendung nach einem der Ansprüche 1 bis 8, bei der der zumindest eine nicht-ionische Emulgator (ii) ein nichtionischer Ester des Fettsäurebestandteils ist.

10. Verwendung nach einem der Ansprüche 1 bis 9, bei der der zumindest eine nicht-ionische Emulgator (ii) ein Polyethylenglykol(PEG)-Ester von Fettsäuren ist.

11. Verwendung nach einem der Ansprüche 1 bis 10, bei der das Hilfsmittel eine Kombination von zwei oder mehr nicht-ionischen Emulgatoren aufweist.

12. Verwendung nach Anspruch 11, bei der der zumindest eine nicht-ionische Emulgator (ii) eine Kombination von einem Alkylarylethoxylat und einem Polyethylenglykol(PEG)-Ester von ungesättigten Fettsäuren ist.

13. Verwendung nach Anspruch 12, bei der das Alkylarylethoxylat erhältlich ist durch eine Reaktion von zumindest einem Mitglied der Gruppe bestehend aus Octyl-, Nonyl- oder Dodecylphenol mit 3 bis 13 Molen an Ethylenoxid, und bei der der PEG-Ester einen Molekulargewichtsbereich von 200 bis 600 mit entweder einem oder zwei Molen an ungesättigten Fettsäuren aufweist.

14. Verwendung nach Anspruch 12, bei der das Alkylarylethoxylat erhältlich ist durch Reaktion von ethoxyliertem Nonylphenol mit 9 Molen Ethylenoxid, und mit PEG-400-di-oleat, und zwar im Verhältnis von 1:2 Gew.-% des Alkylarylethoxylats zu dem PEG-400-di-oleat.

15. Verwendung nach einem der Ansprüche 1 bis 8, bei der der zumindest eine nicht-ionische Emulgator (ii) eine ethoxylierte Sojaamin-Base ist.

16. Verwendung nach Anspruch 15, bei der die ethoxylierte Sojaamin-Base 15 Mole an Ethoxylierung aufweist.

17. Verwendung nach einem der Ansprüche 1 bis 8, bei der der zumindest eine nicht-ionische Emulgator (ii) ein Fettalkohol ist.

18. Verwendung nach Anspruch 17, bei der der Fettalkohol 6 Mole an Ethoxylierung bei einem Alkohol mit 12 Kohlenstoffatomen aufweist.

19. Verwendung nach einem der Ansprüche 1 bis 18, bei der die Insektizidzusammensetzung zumindest etwa 0,5 V/V-% des Hilfsmittels und einen Pyrethroid-Wirkstoff aufweist.

20. Verwendung nach einem der Ansprüche 1 bis 18, bei der die Insektizidzusammensetzung zumindest etwa 80 V/V-% des Hilfsmittels und einen Pyrethroid-Wirkstoff aufweist.

21. Verwendung nach einem der Ansprüche 1 bis 18, bei der die Insektizidzusammensetzung zumindest etwa 0,5 bis 25 V/V-% des Hilfsmittels und einen Pyrethroid-Wirkstoff aufweist.

22. Verwendung nach einem der Ansprüche 1 bis 18, bei der die Insektizidzusammensetzung zumindest etwa 1 bis 10 V/V-% des Hilfsmittels und einen Pyrethroid-Wirkstoff aufweist.

23. Verwendung nach einem der Ansprüche 1 bis 18, bei der die Insektizidzusammensetzung zumindest 2 bis 5 V/V-% des Hilfsmittels und einen Pyrethroid-Wirkstoff aufweist.

24. Verfahren zum Behandeln von Insekten mit den Schritten, nämlich Anwenden einer Insektizidzusammensetzung auf einen Bodenertrag, welche einen Pyrethroid-Wirkstoff und ein Hilfsmittel aufweist, enthaltend:
(i) zumindest einen Alkylester einer Fettsäure mit einem Grad an Unsättigung von zumindest 40 % oder zumindest einem Alkylester einer dibasischen Säure und (ii) zumindest einem nicht-ionischen Emulgator.

25. Verfahren nach Anspruch 24, bei dem das Hilfsmittel mit der Insektizidzusammensetzung zusammengebracht wird und bei dem Bodenertrag angewendet wird oder vor der Anwendung verdünnt wird.

26. Verfahren nach Anspruch 24, bei dem das Hilfsmittel zu der Insektizidzusammensetzung und einem Verdünnungsmittel hinzugefügt wird.

## Revendications

1. Utilisation de :
(i) au moins un ester d'alkyle d'un acide gras présentant un niveau d'insaturation d'au moins 40%, ou au moins un ester d'alkyle d'un acide dibasique, et
(ii) au moins un émulsifiant non ionique comme adjuvant pour améliorer l'efficacité ou réduire la quantité d'un principe actif pyréthroïde.

2. Utilisation selon la revendication 1, dans une composition insecticide comprenant un principe actif pyréthroïde.

3. Utilisation selon la revendication 1 ou la revendication 2, selon laquelle ledit adjuvant comprend au moins un dit ester d'alkyle d'un acide gras (i), représentant au moins 50% dudit adjuvant, et au moins un dit émulsifiant non ionique.

4. Utilisation selon la revendication 1 ou la revendication 2, selon laquelle au moins un ester d'alkyle d'un acide gras (i) présente un niveau d'insaturation d'au moins 50%.

5. Utilisation selon la revendication 3 ou la revendication 4, selon laquelle au moins un dit ester d'alkyle d'un acide gras (i) est un ester de méthyle ou d'éthyle.

6. Utilisation selon la revendication 5, selon laquelle au moins un dit ester d'alkyle d'un acide gras (i) est un ester d'éthyle.

7. Utilisation selon la revendication 1 ou la revendication 2, selon laquelle au moins un dit ester d'alkyle d'un ester dibasique est un ester de maléate.

8. Utilisation selon la revendication 1 ou la revendication 2, selon laquelle au moins un ester d'alkyle d'un ester dibasique est un ester de diisooctylmaléate

9. Utilisation selon l'une quelconque des revendications 1 à 8, selon laquelle au moins un émulsifiant non ionique (ii) est un ester non ionique de la fraction d'acide gras.

10. Utilisation selon l'une quelconque des revendications 1 à 9, selon laquelle au moins un dit émulsifiant non ionique (ii) est un ester de polyéthylèneglycol d'acides gras.

11. Utilisation selon l'une quelconque des revendications 1 à 10, selon laquelle ledit adjuvant comprend une combinaison de deux émulsifiants non ioniques ou plus.

12. Utilisation selon la revendication 11, selon laquelle au moins un dit émulsifiant non ionique (ii) est une combinaison d'éthoxylate d'alkyl-aryle et d'un ester de polyéthylèneglycol d'acides gras non saturés.

13. Utilisation selon la revendication 12, selon laquelle ledit éthoxylate d'alkylaryle peut être obtenu en faisant réagir au moins un élément du groupe se composant d'octyl-, nonyl- ou dodécylphénol avec 3 à 13 moles d'oxyde d'éthylène, et selon laquelle l'ester de polyéthylèneglycol présente un poids moléculaire compris entre 200 et 600 avec une ou deux moles d'acides gras non saturés.

14. Utilisation selon la revendication 12, selon laquelle ledit éthoxylate d'alkylaryle peut être obtenu en faisant réagir du nonylphénol éthoxylaté avec 9 moles d'oxyde d'éthylène et du polyéthylèneglycol 400 dioléate, selon un rapport de 1:2 en poids dudit éthoxylate d'alkyl-aryle sur ledit polyéthylèneglycol 400 dioléate.

15. Utilisation selon l'une quelconque des revendications 1 à 8, selon laquelle au moins un émulsifiant non ionique (ii) est une base amine de soja éthoxylée.

16. Utilisation selon la revendication 15, selon laquelle ladite base amine de soja éthoxylée comporte 15 moles d'éthoxylation.

17. Utilisation selon l'une quelconque des revendications 1 à 8, selon laquelle au moins un dit émulsifiant non ionique (ii) est un alcool gras.

18. Utilisation selon la revendication 17, selon laquelle l'alcool gras présente 6 moles d'éthoxylation sur un alcool de carbone 12.

19. Utilisation selon l'une quelconque des revendications 1 à 18, selon laquelle ladite composition insecticide comprend au moins environ 0,5% en volume dudit adjuvant et un principe actif pyréthroïde.

20. Utilisation selon l'une quelconque des revendications 1 à 18, selon laquelle ladite composition insecticide comprend au moins 80% en volume dudit adjuvant et un principe actif pyréthroïde.

21. Utilisation selon l'une quelconque des revendications 1 à 18, selon laquelle ladite composition insecticide comprend au moins entre 0,5 et 25% environ en volume dudit adjuvant et un principe actif pyréthroïde.

22. Utilisation selon l'une quelconque des revendications 1 à 18, selon laquelle ladite composition insecticide comprend au moins entre 1 et 10% environ en volume dudit adjuvant et d'un principe actif pyréthroïde.

23. Utilisation selon l'une quelconque des revendications 1 à 18, selon laquelle ladite composition insecticide comprend au moins entre 2 et 5% en volume environ dudit adjuvant et un principe actif pyréthroïde.

24. Procédé de traitement d'insectes consistant à appliquer à une culture une composition insecticide comprenant un principe actif pyréthroïde et un adjuvant comprenant :
(i ) au moins un ester d'alkyle d'un acide gras présentant un niveau d'insaturation d'au moins 40%, ou au moins un ester d'alkyle d'un acide dibasique, et (ii) au moins un émulsifiant non ionique

25. Procédé selon la revendication 24, selon lequel ledit adjuvant est incorporé dans ladite composition insecticide et appliqué à ladite culture, ou dilué avant son application.

26. Procédé selon la revendication 24, selon lequel ledit adjuvant est ajouté à ladite composition insecticide ainsi qu'un diluant.
